# EUROPEAN PATENT APPLICATION

(11) **EP 3 148 240 A1**
(43) Date of publication of application: **29.03.2017**
(21) Application number: 16190144.2
(22) Date of filing: 22.09.2016
(51) Int. Cl.: H04W 16/14, H04W 74/08

(54) **METHOD OF INTERWORKING OF DIFFERENT WLAN STANDARDS**

(30) Priority: 23.09.2015 US 201562222219 P; 21.09.2016 US 201615271236
(71) Applicant: MediaTek Inc., Hsin-Chu 300 (TW)
(72) Inventor: SU, Shih-Chang, 302 Hsinchu County (TW)
(74) Representative: Hoefer & Partner Patentanwälte mbB

(57) **Abstract**

A wireless device for interoperating with a wireless system transmits a first preamble over a first bandwidth followed by a frame over a second bandwidth, where the first bandwidth is different from the second bandwidth. The first preamble is readable by the wireless system and the wireless system reserves an interval for the wireless device to perform transmission. Hence, the wireless device is able to interoperate with the wireless system.

## Description

### Field of the Invention

The present invention relates to a method of operating in a wireless system and a wireless device using the same, and more particularly, to a method and a wireless device capable of inserting an additional preamble followed by a regular data frame.

### Background of the Invention

As a demand for wireless service increases, a bandwidth of the wireless local area network (WLAN) system is required to be wider. For example, bandwidths of the WLAN systems complied with standards of IEEE 802.11a/g are 20 MHz, bandwidths of the WLAN systems complied with standards of IEEE 802.11n are 20 MHz or 40 MHz, and bandwidths of the WLAN systems complied with standards of IEEE 802.11ac are 20, 40, 80 MHz or even 160 MHz.

From another perspective, internet of thing (IoT), which connects devices through wireless connections, is getting popular recently. The devices under IoT, expected to provide low data rate transmission and consume low power, do not require such a wide operating bandwidth. Typically, a 5 MHz (or 10 MHz) bandwidth is sufficient for the devices under IoT. In some applications, the devices under IoT may be narrowband devices, which are originally configured to operate in a narrowband system (e.g., under a standard of IEEE 802.11j), and attempt to operate in a wideband WLAN system (e.g., under a standard of one of IEEE 802.11 a/b/g/n/ac). However, the wideband WLAN systems (IEEE 802.11a/b/g/n/ac) are usually not compatible with the narrow WLAN system (IEEE 802.11j). In detail, frame structures specified by IEEE 802.11j are different from those specified by one of IEEE 802.11a/b/g/n/ac, and frames transmitted by the narrowband devices (complying with IEEE 802.11j standard) are not readable/recognized by the wideband devices (complying with IEEE 802.11a/b/g/n/ac standards), such that the narrowband devices is hard to operate in the wideband wireless systems.

Therefore, how to provide a method for a narrowband wireless device (i.e., a wireless device with a narrow operating bandwidth) to operate in a wideband wireless system is a significant objective in the field.

### Summary of the Invention

It is therefore a primary objective of the present invention to provide a method of operating in a wideband wireless system for a narrowband wireless device and a wireless device using the same, to improve over disadvantages of the prior art.

This is achieved by a method of updating a program code and an electronic device according to the independent claims 1 and 10 respectively here below. The dependent claims pertain to corresponding further developments and improvements.

As will be seen more clearly from the detailed description following below, a claimed method (30) of interoperating with a wireless system (10) for a wireless device, comprises steps of generating a first preamble (221) over a first bandwidth (BW1); and transmitting the first preamble over the first bandwidth followed by a frame (222) over a second bandwidth (BW2); wherein the first bandwidth is corresponding to the wireless system, and the first bandwidth is different from the second bandwidth.

In another aspect of the invention, a claimed wireless device (20), configured to interoperate with a wireless system (10), comprises a processing unit (202); and a storage unit (204), coupled to the processing unit, configured to store a program code (206), the program code instructing the processing unit to perform following steps generating a first preamble (221) over a first bandwidth (BW1); and transmitting the first preamble over the first bandwidth followed by a frame (222) over a second bandwidth (BW2); wherein the first bandwidth is corresponding to the wireless system, and the first bandwidth is different from the second bandwidth.

### Brief Description of the Drawings

FIG. 1 is a schematic diagram of a wireless device according to an embodiment of the present invention.
FIG. 2 is a schematic diagram of a concatenating frame according to an embodiment of the present invention.
FIG. 3 is a schematic diagram of a process according to an embodiment of the present invention.
FIG. 4 is a schematic diagram of a first preamble according to an embodiment of the present invention.
FIG. 5 is a schematic diagram of a frame according to an embodiment of the present invention.
FIG. 6 is a schematic diagram of a concatenating frame according to an embodiment of the present invention.

### Detailed Description

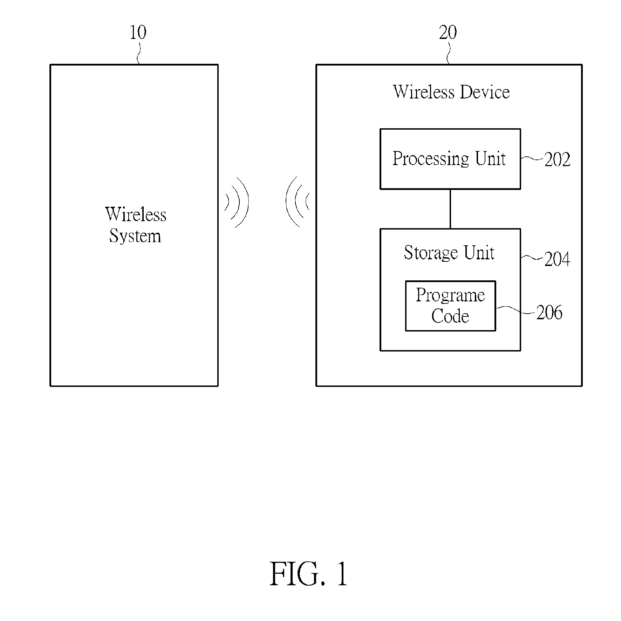

Please refer to FIG. 1, which is a schematic diagram of a wireless device 20 according to an embodiment of the present invention. The wireless device 20 attempts to interoperate with a first wireless system 10 which operates in a first bandwidth, while the wireless device 20 is customized for operating in a second bandwidth, where the second bandwidth is different from the first bandwidth. The wireless device 20 comprises a processing unit 202 and a storage unit 204. The storage unit 204 is coupled to the processing unit 202 and configured to store a program code 206, where the program code 206 instructs the processing unit 202 to execute a process for the wireless device 20 to interoperate with the wireless system 10, such that the wireless device 20 may obtain a transmission opportunity during operations of the wireless system 10. Specifically, the wireless system 10 is under a first standard and the wireless device 20 complies with a second standard, and the first standard is different from the second standard. In an embodiment, the first standard is one of IEEE 802.11 a/b/g/n/ac, and the second standard is IEEE 802.11j. Hence, the first bandwidth may be 20 MHz, 40 MHz, 80 MHz, or 160 MHz, and the second bandwidth may be 5 MHz or 10 MHz.

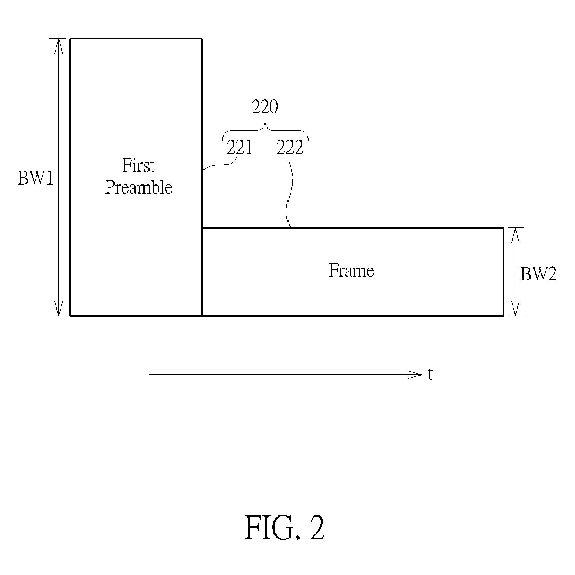

To interoperate with the wireless system 10, the wireless device 20 first transmits a first preamble before the wireless device 20 transmits a regular frame under the second standard. Specifically, please refer to FIG. 2, which is a schematic diagram of a concatenating frame 220 transmitted by the wireless device 20 according to an embodiment of the present invention. For illustrative purpose, a time axis t is added in FIG. 2. The concatenating frame 220 concatenates a first preamble 221 and a frame 222. The first preamble 221 is transmitted first over a first bandwidth BW1, and then the frame 222 is transmitted consecutively over a second bandwidth BW2 after the first preamble 221 is transmitted, where the first bandwidth BW1 is wider than the second bandwidth BW2. Specifically, a format of the first preamble 221 is under the first standard, and a frame format of the frame 222 is under the second standard. Hence, the wireless system 10 is able to read/recognize the first preamble 221, such that the wireless device 20 is able to obtain an opportunity to transmit the frame 222, to interoperate with the wireless system 10.

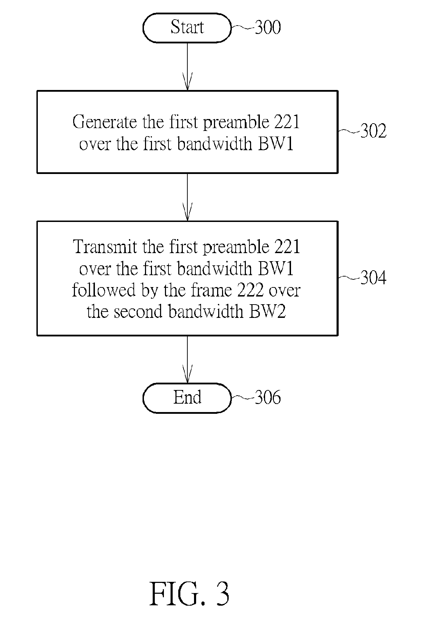

Please refer to FIG. 3, which is a schematic diagram of a process 30 according to an embodiment of the present invention. The process 30 may be compiled as the program code 206 stored in the storage unit 204 and executed by the processing unit 202. The process 30 comprises following steps:
Step 300: Start.
Step 302: Generate the first preamble 221 over the first bandwidth BW1.
Step 304: Transmit the first preamble 221 over the first bandwidth BW1 followed by the frame 222 over the second bandwidth BW2.
Step 306: End.

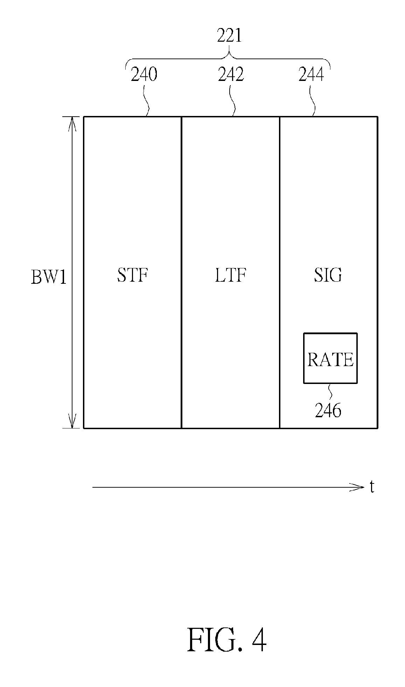

According to the process 30, the wireless device 20 is able to interoperate with the wireless system 10. In detail, the wireless device 20 generates the first preamble 221 in Step 302 according to the first standard. Please refer to FIG. 4, which is a schematic diagram of the first preamble 221 according to an embodiment of the present invention. The first preamble 221 may be under the first standard. Specifically, the first preamble 221 may be a physical layer convergence procedure (PLCP) preamble under the first standard. The first preamble 221 comprises a short training field (STF) 240, a long training field (LTF) 242 and a signal (SIG) field 244. The first preamble 221 is configured to be readable/recognized by the wireless system 10, such that the wireless system 10 would reserve an interval for the wireless device 20 to perform transmission. Note that, within the SIG field 244, a rate field 246 is included to inform the wireless system 10 about a transmission rate (e.g., a modulation and coding scheme) of the wireless device 20 to transmit data. Preferably, the wireless device 20 generates the first preamble 221 with the rate field 246 which indicates that the transmission rate of the wireless device 20 is the lowest rate, i.e., the wireless device 20 uses a binary phase shift-keying (BPSK) modulation and a code rate of 1/2 to transmit data during the time after the first preamble 221. Thereby, the wireless system 10 would reserve a long interval for the wireless device 20 to transmit the frame 222.

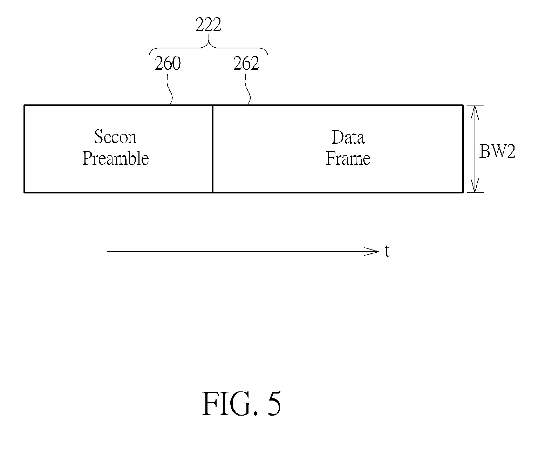

In Step 304, the wireless device 20 transmits the first preamble 221 over the first bandwidth BW1 followed by the frame 222 over the second bandwidth BW2, i.e., the wireless device 20 transmits the first preamble 221 over the first bandwidth BW1 first and then transmits the frame 222 over the second bandwidth BW2 consecutively. Please refer to FIG. 5, which is a schematic diagram of the frame 222 according to an embodiment of the present invention. The frame 222 may be under the second standard. The frame 222 comprises a second preamble 260 and a data frame 262. Both the second preamble 260 and the data frame 262 are transmitted over/within the second bandwidth BM2BW2. The second preamble 260 may also be a physical layer convergence procedure (PLCP) preamble. The frame 222 is intended for a target receiver corresponding to the wireless device 20, which also complies with the second standard. The target receiver is able to read/recognize the second preamble 260, such that the target receiver is able to decode the data frame 262 transmitted from the wireless device 20.

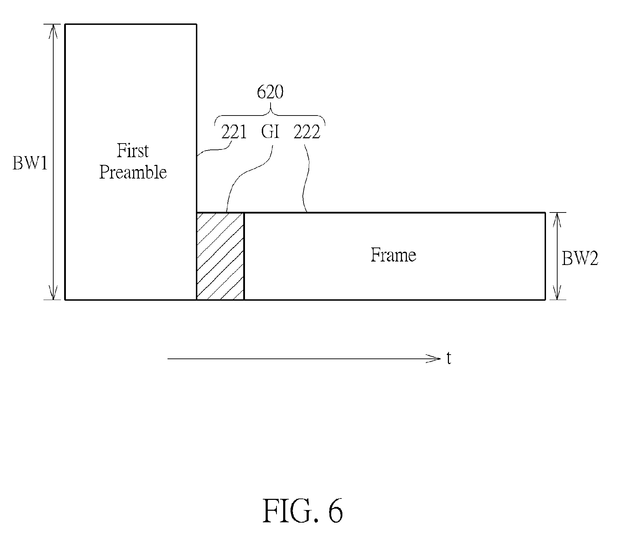

The wireless device 20 may reserve a guard time between the first preamble 221 and the frame 222. Please refer to FIG. 6, which is a schematic diagram of a concatenating frame 620 transmitted by the wireless device 20 according to an embodiment of the present invention. The concatenating frame 620 is similar to the concatenating frame 220, and thus, the same components are denoted by the same symbols. Different from the concatenating frame 220, the wireless device 20 inserts a guard time GI between the first preamble 221 and the frame 222. The guard time GI is a buffer time reserved for the wireless device 20 for transition from the first bandwidth to the second bandwidth. Thereby, a requirement of the wireless device 20 in hardware complexity may be less stringent.

In short, the wireless device 20 transmits the first preamble 221, which is readable/recognized by the wireless system 10, such that the wireless system 10 would reserve an interval for the wireless device 20 to transmit the regular frame 222 to the target receiver corresponding to the wireless device 20. Hence, the wireless device 20 is able to interoperate with the wireless system 10.

Notably, the embodiments stated in the above are utilized for illustrating the concept of the present invention. Those skilled in the art may make modifications and alternations accordingly. For example, the first bandwidth and the second bandwidth are not limited to be any specific values. As long as the first bandwidth and the second bandwidth are different, the requirement of the present invention is satisfied. In addition, the first standard and the second standard are not limited to any specific standards. As long as the first bandwidth and the second bandwidth are different, and the first preamble is readable/recognized by the wireless system which the wireless device likes to interoperate with, the requirement of the present invention is satisfied. In addition, the processing unit 202 may be a microprocessor or an application-specific integrated circuit (ASIC). The storage unit 204 may be read-only memory (ROM), random-access memory (RAM), non-volatile memory (e.g., an electrically erasable programmable read only memory (EEPROM) or a flash memory), CD-ROMs, magnetic tapes, floppy disks, optical data storage devices.

In summary, the wireless device transmits the first preamble readable/recognized by the wireless system according to the embodiment of the present invention, such that the wireless system reserves an interval for the wireless device to perform transmission. Therefore, the wireless device is able to interoperate with the wireless system.

## Claims

1. A method (30) of interoperating with a wireless system (10) for a wireless device (20), the method **characterized by** comprising:
generating a first preamble (221) over a first bandwidth (BW1); and
transmitting the first preamble (221) over the first bandwidth (BW1) followed by a frame (222) over a second bandwidth (BW2);
wherein the first bandwidth (BW1) is corresponding to the wireless system (10), and the first bandwidth (BW1) is different from the second bandwidth(BW2).

2. The method (30) of claim 1, **characterized by** further comprising:
reserving a guard time (GI) between the first preamble (221) and the frame (222).

3. The method (30) of claim 1 or 2, **characterized in that** the first bandwidth (BW1) is wider than the second bandwidth (BW2).

4. The method (30) of any of claims 1-3, **characterized in that** the first preamble (221) is under a first standard, and the frame is under a second standard.

5. The method (30) of claim 4, **characterized in that** the first standard is different from the second standard.

6. The method (30) of claim 4, **characterized in that** the first standard is one of IEEE 802.11a/b/g/n/ac.

7. The method (30) of claim 4, **characterized in that** the first preamble is a physical layer convergence procedure (PLCP) preamble under the first standard.

8. The method (30) of claim 4, **characterized in that** the second standard is IEEE 802.11j standard.

9. A wireless device (20), configured to interoperate with a wireless system (10), the wireless device comprising:
a processing unit (202); and
a storage unit (204), coupled to the processing unit, configured to store a program code (206), the program code instructing the processing unit to perform following steps:
generating a first preamble (221) over a first bandwidth (BW1); and
transmitting the first preamble (221) over the first bandwidth (BW1) followed by a frame (222) over a second bandwidth (BW2);
wherein the first bandwidth is corresponding to the wireless system (10), and the first bandwidth (BW1) is different from the second bandwidth (BW2).

10. The wireless device (20) of claim 9, **characterized in that** the program code further instructs the processing unit to reserve a guard time (GI) between the first preamble (221) and the frame (222).

11. The wireless device (20) of claim 9 or 10, **characterized in that** the first bandwidth (BW1) is wider than the second bandwidth (BW2).

12. The wireless device (20) of any of claims 9-11, **characterized in that** the first preamble (221) is under a first standard, and the frame (222) is under a second standard.

13. The wireless device (20) of claim 12, **characterized in that** the first standard is different from the second standard.

14. The wireless device (20) of claim 12, **characterized in that** the first standard is one of IEEE 802.11a/b/g/n/ac.

15. The wireless device (20) of claim 12, **characterized in that** the first preamble is a physical layer convergence procedure (PLCP) preamble under the first standard.

16. The wireless device (20) of claim 12, **characterized in that** the second standard is IEEE 802.11j standard.
